# EUROPÄISCHE PATENTANMELDUNG

(11) **EP 2 502 706 A1**
(43) Veröffentlichungstag der Anmeldung: **26.09.2012**
(21) Anmeldenummer: 11159813.2
(22) Anmeldetag: 25.03.2011
(51) Int. Cl.: B25B 11/02, B25B 5/10, B23K 37/04, B23K 37/053

(54) **Vorrichtung zum Positionieren eines zweiten Werkstückes an einer Stirnfläche eines ersten, länglichen Werkstückes**

(71) Anmelder: Creametal AG, 3011 Bern (CH)
(72) Erfinder: Stiefenhofer, Rolf, CH-3612, Steffisburg (CH)
(74) Vertreter: AMMANN PATENTANWÄLTE AG BERN

(57) **Zusammenfassung**

Die Vorrichtung (3) hat eine Klemmvorrichtung (6) mit einem Anlagebereich (4) für ein erstes Werkstück. Eine Auflage (12) für ein zweites Werkstück ist mindestens annähernd rechtwinklig zur Ebene des Anlagebereichs (4) verstellbar. Die Klemmvorrichtung (6) weist ein gegen den Anlagebereich (4) bewegbares Klemmelement (7) auf und die Auflage (12) liegt an mindestens einem Führungsteil (13) an, der mindestens annähernd rechtwinklig zum Anlagebereich (4) orientiert ist. Diese Vorrichtung ist derart einfach aufgebaut, dass sie zu einem Werkstück getragen und dort angeklemmt werden kann, anstatt, dass das Werkstück auf eine stationäre Vorrichtung transportiert werden muss.

## Beschreibung

Die Erfindung betrifft eine Vorrichtung zum Positionieren eines zweiten Werkstückes an einer Stirnfläche eines ersten, länglichen Werkstückes, mit einer einen Anlagebereich für das erste Werkstück enthaltenden Klemmvorrichtung und mit einer mindestens annähernd rechtwinklig zur Ebene des Anlagebereichs verstellbaren Auflage für das zweite Werkstück.

In der Praxis stellt sich oft die Aufgabe, ein Werkstück an einer Stirnfläche eines anderen, länglichen Werkstückes zu positionieren, beispielsweise um die beiden Werkstücke miteinander zu verbinden. Solche Situationen treten besonders im Stahlbau relativ häufig auf, beispielsweise wenn es darum geht, an einem Pfosten eine Endplatte anzuschweissen. Ohne eine entsprechende Vorrichtung ist es oft unmöglich, die beiden Werkstücke in einer definierten Position gegeneinander auszurichten. Bekannte Vorrichtungen haben ein Gestell oder einen Tisch, auf dem das erste, längliche Werkstück abzulegen und zu spannen ist. Gerade das ist aber bei grossen und/oder schweren Werkstücken oft schwierig und vielfach nicht durch eine einzige Person zu bewältigen.

Ausgehend von diesem Stand der Technik liegt der Erfindung die Aufgabe zugrunde, eine Vorrichtung zur Verfügung zu stellen, die derart einfach aufgebaut ist, dass sie zu einem Werkstück getragen und dort angeklemmt werden kann, anstatt, dass das Werkstück auf die Vorrichtung transportiert wird.

Diese Aufgabe wird erfindungsgemäss dadurch gelöst, dass die Klemmvorrichtung ein gegen den Anlagebereich bewegbares Klemmelement aufweist und dass die Auflage an mindestens einem Führungsteil anliegt, der mindestens annähernd rechtwinklig zum Anlagebereich orientiert ist.

Diese erfindungsgemässe Lösung hat insbesondere den Vorteil, dass durch das gegen den Anlagebereich bewegbare Klemmelement der Anlagebereich gleichzeitig zum Klemmen des ersten Werkstückes dient, wodurch die Vorrichtung mit nur wenigen Einzelteilen aufgebaut und somit leicht und durch eine einzige Person tragbar ausgeführt werden kann.

Nach einer Ausführungsart weist der Anlagebereich zwei in einer gemeinsamen Ebene liegende, voneinander beabstandete, mindestens annähernd rechtwinklig zur Auflage orientierte Teilflächen auf. Damit kann die Vorrichtung beispielsweise an einem als Rundprofil ausgebildeten ersten Werkstück angebracht werden, indem das Werkstück in den Bereich zwischen den Teilflächen zu liegen kommt.

Gemäss einer anderen Ausführungsart wird jede Teilfläche durch die Oberfläche jeweils eines Anlageprofils gebildet. Dies ermöglicht eine einfache Herstellung der Vorrichtung.

Nach einer weiteren Ausführungsart werden die Anlageprofile durch eine gemeinsame Grundplatte getragen. Auch dies vereinfacht die Herstellung der Vorrichtung.

Wenn nach einer zusätzlichen Ausführungsart die beiden Anlageprofile auf der Grundplatte auswechselbar befestigt sind, kann die Vorrichtung an Formen und Dimensionen zu positionierender Werkstücke angepasst werden.

Eine weitere Ausführungsart sieht vor, dass die Grundplatte und der Führungsteil einstückig ausgebildet sind. Dies ermöglicht eine einfache Herstellung, beispielsweise durch Biegen.

Nach einer anderen Ausführungsart überragt der Führungsteil die Grundplatte in Richtung zum Klemmelement. Dadurch kann die Auflage auch über den Anlagebereich hinaus verstellt werden.

Schliesslich ist nach einer weiteren Ausführungsart vorgesehen, dass die Auflage am Führungsteil durch eine Schraube festgeklemmt ist, welche durch einen Schlitz des Führungsteils greift und mit einem Nutenstein verbunden ist. Eine solche Vorrichtung ist einfach herstellbar und leicht zu verstellen.

Ein Ausführungsbeispiel der Erfindung wird nachstehend unter Bezugnahme auf die angefügten Zeichnungen beispielsweise näher beschrieben. Es zeigt
- Figur 1: eine perspektivische Ansicht der Vorrichtung,
- Figur 2: einen Aufriss in Richtung der Längsachse eines mit der Vorrichtung zu verbindenden ersten Werkstücks gesehen und
- Figur 3: einen Aufriss quer zur Längsachse eines mit der Vorrichtung zu verbindenden ersten Werkstücks gesehen.

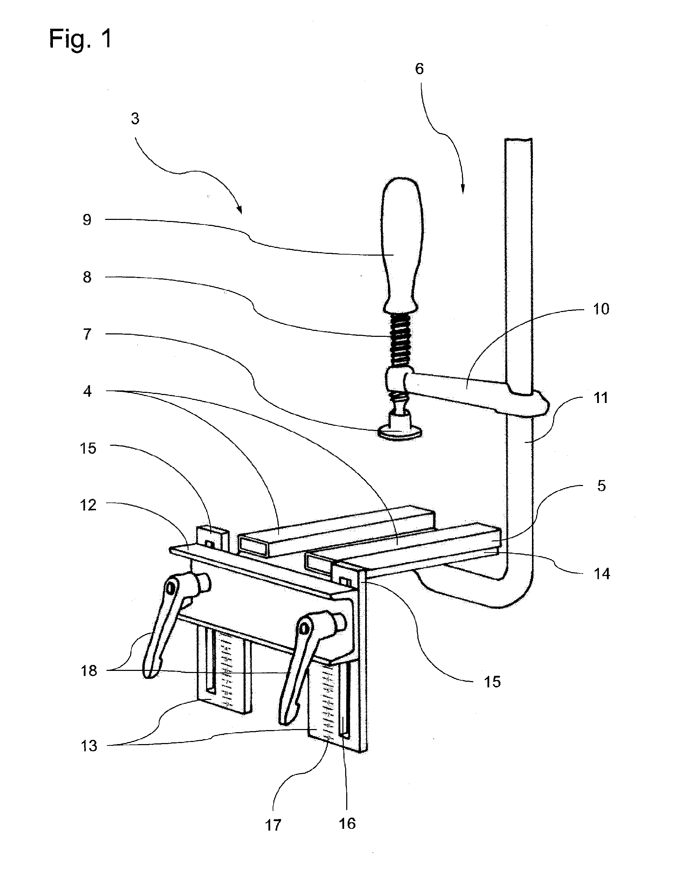

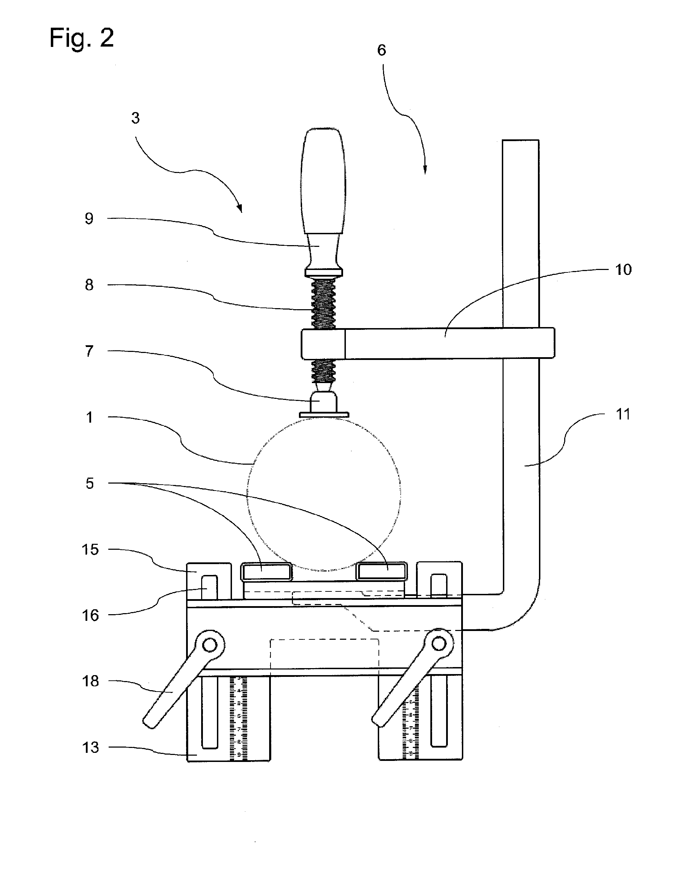

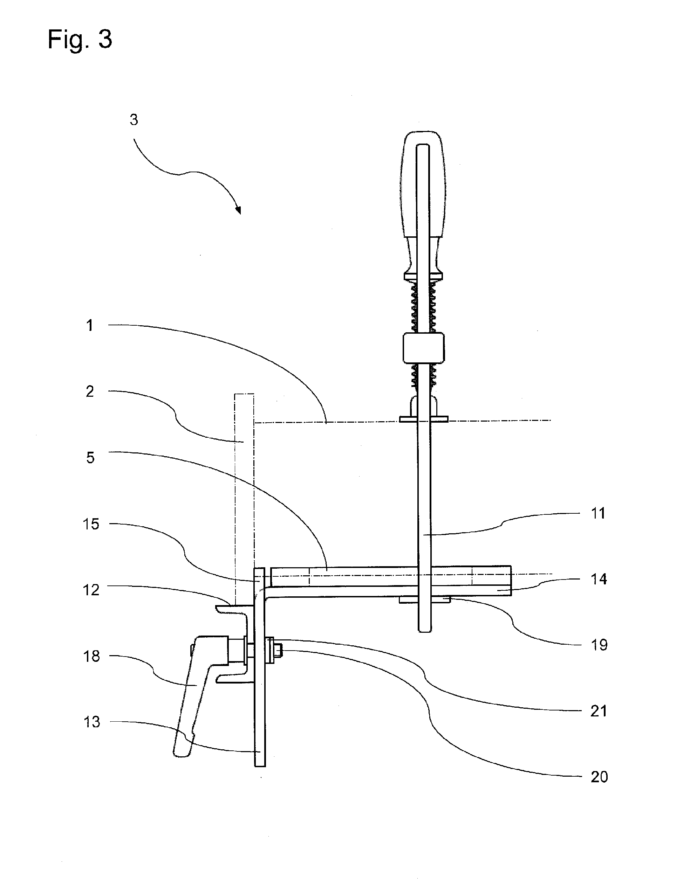

Figur 1 zeigt in einer perspektivischen Ansicht ein Ausführungsbeispiel einer erfindungsgemässen Vorrichtung, die in der Figur als Ganzes mit der Bezugszahl 3 bezeichnet ist. Die Vorrichtung 3 weist einen Anlagebereich 4 für ein erstes, längliches Werkstück 1 (Figuren 2 und 3) auf, der nachstehend noch genauer beschrieben wird. Der Anlagebereich 4 ist durch zwei parallel angeordnete Anlageprofile 5 gebildet, welche für Werkstücke mit einer ebenen Mantelfläche eine ebene Anlagefläche bilden. Für Werkstücke mit einer zylindrischen Mantelfläche bilden die beiden Anlageprofile 5 an den Berührungsstellen zwei Anlagelinien. Eine Klemmvorrichtung ist in der Figur als Ganzes mit 6 bezeichnet und besteht aus einem mit dem ersten Werkstück in Kontakt zu treten bestimmten Klemmelement 7, einer Spindel 8 mit Drehgriff 9, einem Arm 10 und einem mit einem Schenkel in den Bereich unter dem Anlagebereich 4 ragenden Bügel 11. Die Klemmvorrichtung kann beispielsweise aus einer handelsüblichen Schraubzwinge bestehen. Die Vorrichtung muss aber nicht zwingend so an einem ersten Werkstück 1 angeklemmt werden, dass dieses parallel zu den beiden Anlageprofilen 5 ausgerichtet ist. Vielmehr kann die Vorrichtung auch so am ersten Werkstück 1 angeordnet werden, dass dieses in einem spitzen Winkel auf den Oberflächen der beiden Anlageprofile 5 aufliegt. Diese Verwendungsart erlaubt beispielsweise das Positionieren einer Fussplatte an einerm schräg abgeschnittenen Ende einer Stütze, die zur Montage auf einer geneigten Fläche bestimmt ist. Ausserdem ist es vorteilhaft, wenn die Anlageprofile auswechselbar an der Grundplatte 14 befestigt sind, beispielsweise durch Schrauben.

Eine im dargestellten Beispiel als U-Profil ausgebildete Auflage 12 für das zweite Werkstück 2 (Figur 3) ist an zwei parallel angeordneten Führungsteilen 13 verstellbar angeordnet. Die Auflage 12 könnte auch als Winkelprofil oder als Flachprofil ausgebildet sein. Die genannten Führungsteile 13 sind einstückig mit einer Grundplatte 14 durch mindestens annähernd rechtwinkliges Abbiegen ausgebildet. Jeder Führungsteil 13 weist eine Verlängerung 15 auf, die in der Figur oben über die obere Fläche der Grundplatte 14 hinausragt. In jedem Führungsteil 13 ist ein in der Figur vertikal angeordneter Schlitz 16 angebracht, der das Verstellen der Auflage 12 in einer Richtung senkrecht zu einer Ebene, in welcher der Anlagebereich 4 liegt, erlaubt. Die Auflage 12 ist dabei durch Schrauben 20 (Figur 3), die durch die Schlitze 16 ragen und Nutensteine 21 (Figur 3) an den Führungsteilen 13 festgeklemmt. Damit die Schrauben 20 ohne Werkzeug drehbar sind, ist an diesen jeweils ein Feststellhebel 18 angeordnet. Massstäbe 17 an den Führungsteilen 13 erlauben das exakte Positionieren der Auflage 12.

Figur 2 zeigt eine Ansicht der Vorrichtung gemäss Figur 1 in einer Ansicht in Richtung auf die Stirnfläche eines ersten Werkstücks 1, das hier mit einer strichpunktierten Linie eingezeichnet ist. Das erste Werkstück kann beispielsweise als Rohr ausgebildet sein und liegt auf jeweils an einer innenliegenden Kante der Anlageprofile 5 an. In Figur 3 ist die gleiche Vorrichtung in einer seitlichen Ansicht dargestellt. Im Gebrauch wird die Vorrichtung 3 mithilfe der Klemmvorrichtung 6 so am ersten Werkstück 1 fixiert, dass dessen Stirnfläche mit der der Auflage 12 zugewandten Oberfläche der Führungsteile 13 bündig ist oder diese überragt. Die Auflage 12 wird in die gewünschte Lage gebracht und mittels der Feststellhebel 18 fixiert. In dieser Figur ist sichtbar, dass die Feststellhebel 18 mit Schrauben 20 verbunden sind, die in Nutensteine 21 eingreifen. Das zweite Werkstück 2 wird auf die Auflage 12 gesetzt und an der genannten Stirnfläche angelegt. In dieser Position kann das zweite Werkstück 2 mit einer Hand festgehalten werden, während mit der zweiten Hand beispielsweise einige Schweisspunkte gesetzt werden, um die beiden Werkstücke zunächst provisorisch miteinander zu verbinden. Vor dem definitiven Verschweissen der beiden Werkstücke 1 und 2 kann die Vorrichtung 3 bereits wieder abgenommen werden. In Figur 3 ist ausserdem gut erkennbar, dass die Grundplatte 14 und die Führungsteile 13 einstückig miteinander verbunden sind, vorzugsweise durch Umbiegen. Ausserdem ist eine Kontaktplatte 19 zu sehen, wie sie an Schraubzwingen üblicherweise vorhanden sind. Diese Kontaktplatte 19 kann mit der Grundplatte 14 zum Beispiel durch Schweissen verbunden sein.

Wie aus allen Figuren ersichtlich ist, überragen die Führungsteile 13 die Grundplatte 14 in Richtung des Klemmelements 7. Dadurch kann die Auflage 12 bis zum Anlagebereich 4 oder sogar darüber hinaus verstellt werden. Damit wird es möglich, das zweite Werkstück 2 gegenüber dem ersten Werkstück 1 so zu positionieren, dass die beiden Werkstücke auf einer Seite bündig sind oder dass die Stirnfläche des ersten Werkstückes 1 nicht vollständig vom zweiten Werkstück 2 bedeckt wird.

### Bezugszeichenliste

- 1: erstes Werkstück
- 2: zweites Werkstück
- 3: Vorrichtung
- 4: Anlagebereich
- 5: Anlageprofil
- 6: Klemmvorrichtung
- 7: Klemmelement
- 8: Spindel
- 9: Drehgriff
- 10: Arm
- 11: Bügel
- 12: Auflage
- 13: Führungsteil
- 14: Grundplatte
- 15: Verlängerung
- 16: Schlitz
- 17: Massstab
- 18: Feststellhebel
- 19: Kontaktplatte
- 20: Schraube
- 21: Nutenstein
- 22:
- 23:
- 24:
- 25:

## Patentansprüche

1. Vorrichtung (3) zum Positionieren eines zweiten Werkstückes (2) an einer Stirnfläche eines ersten, länglichen Werkstückes (1), mit einer einen Anlagebereich (4) für das erste Werkstück (1) enthaltenden Klemmvorrichtung (6) und mit einer mindestens annähernd rechtwinklig zur Ebene des Anlagebereichs (4) verstellbaren Auflage (12) für das zweite Werkstück (2), **dadurch gekennzeichnet, dass** die Klemmvorrichtung (6) ein gegen den Anlagebereich (4) bewegbares Klemmelement (7) aufweist und dass die Auflage (12) an mindestens einem Führungsteil (13) anliegt, der mindestens annähernd rechtwinklig zum Anlagebereich (4) orientiert ist.

2. Vorrichtung nach Anspruch 1, **dadurch gekennzeichnet, dass** der Anlagebereich (4) zwei in einer gemeinsamen Ebene liegende, voneinander beabstandete, mindestens annähernd rechtwinklig zur Auflage (12) orientierte Teilflächen aufweist.

3. Vorrichtung nach Anspruch 2, **dadurch gekennzeichnet, dass** jede Teilfläche durch die Oberfläche jeweils eines Anlageprofils (5) gebildet wird.

4. Vorrichtung nach Anspruch 3, **dadurch gekennzeichnet, dass** die Anlageprofile (5) durch eine gemeinsame Grundplatte (14) getragen werden.

5. Vorrichtung nach Anspruch 4, **dadurch gekennzeichnet, dass** die Anlageprofile (5) auswechselbar an der Grundplatte (14) befestigt sind.

6. Vorrichtung nach einem der Ansprüche 4 oder 5, **dadurch gekennzeichnet, dass** die Grundplatte (14) und der Führungsteil (13) einstückig ausgebildet sind.

7. Vorrichtung nach einem der Ansprüche 4 bis 6, **dadurch gekennzeichnet, dass** der Führungsteil (13) die Grundplatte (14) in Richtung zum Klemmelement (7) überragt.

8. Vorrichtung nach einem der vorangehenden Ansprüche, **dadurch gekennzeichnet, dass** die Auflage (12) am Führungsteil (13) durch eine Schraube (20) festgeklemmt ist, welche durch einen Schlitz (16) des Führungsteils (13) greift und mit einem Nutenstein (20) verbunden ist.
